# EUROPÄISCHE PATENTSCHRIFT

(11) **EP 0 673 671 B1**
(45) Veröffentlichungstag und Bekanntmachung des Hinweises auf die Patenterteilung: **15.09.1999**
(21) Anmeldenummer: 95104311.6
(22) Anmeldetag: 23.03.1995
(51) Int. Cl.: B01D 61/36

(54) **Membranverfahren zur Trennung fluider Gemische**
Membrane process for separating fluid mixtures
Procédé à membrane pour la séparation de mélanges de fluides

(30) Priorität: 24.03.1994 DE 4410243
(43) Veröffentlichungstag der Anmeldung: 27.09.1995
(73) Patentinhaber: DEUTSCHE CARBONE AG, 60437 Frankfurt (DE)
(72) Erfinder: Brüschke, Hartmut E. A., Dr., D-69226 Nussloch (DE); Schneider, Walter Heinrich, Dr., D-69198 Schriesheim (DE)
(74) Vertreter: Dost, Wolfgang, Dr.rer.nat., Dipl.-Chem.

(56) Entgegenhaltungen:
- EP-A- 0 181 656
- EP-A- 0 214 496
- EP-A- 0 345 209
- EP-A- 0 361 499
- DE-A- 4 225 060
- US-A- 3 225 107

## Beschreibung

Die vorliegende Erfindung betrifft ein Verfahren zur Stofftrennung fluider Stoffgemische durch Pervaporation und Dämpfepermeation.

Dem Fachmann sind die Verfahren zur Trennung fluider Stoffgemische durch Pervaporation und Dämpfepermeation bekannt. Das zu trennende Stoffgemisch, der Zulaufstrom wird, mit der ersten Seite, der Zulaufseite einer nichtporösen (porenfreien) Membran in Kontakt gebracht.

Wird durch geeignete Vorrichtungen dafür gesorgt, daß der Partialdruck dieser Komponente auf der zweiten Seite, der Permeatseite, der Membran, niedriger ist als auf der Zulaufseite, so wird die eine Komponente durch die Membran transportiert. Die Absenkung des Partialdrucks auf der Permeatseite erfolgt im allgemeinen durch Anlegen eines Vakuums, so daß das Permeat dampfförmig anfällt und abgesaugt oder kondensiert wird, dem Fachmann sind aber auch andere Möglichkeiten zur Aufrechterhaltung eines Gefälles des Partialdruckes bekannt. Die bevorzugt durch die Membran transportierte (permeierende) Substanz wird somit auf der Permeatseite angereichert, im Zulaufstrom dagegen abgereichert. Dem Fachmann sind sowohl Membranen bekannt, die eine bevorzugte Permeation von Wasser gestatten, organische Komponenten aber zurückhalten als auch solche, die bevorzugt organische Komponenten permeieren lassen, aber Wasser zurückhalten und auch solche, die bestimmte organische Substanzklassen permeieren lassen, andere aber zurückhalten. Somit können durch Pervaporation und Dämpfepermeation sowohl organische Lösungen entwässert werden, als auch organische Komponenten aus Wasser und Gasströmen entfernt werden und es lassen sich auch rein organische Gemische trennen.

Es ist ferner bekannt, daß der Stofftransport durch die Membran (Fluß) mit zunehmender Temperatur steigt, Pervaporation und Dämpfepermeation werden daher bei möglichst hohen Temperaturen betrieben, eine Begrenzung ist im allgemeinen durch die thermische Beständigkeit der Membranen gegeben.

Bei der Pervaporation wird der Zulaufstrom in flüssiger Phase über die Membran geführt, seine Temperatur und sein Druck können frei gewählt werden, solange der Druck höher ist als der Dampfdruck über dem Zulaufgemisch. Damit ist für die Pervaporation eine hohe Flexibilität in der Wahl der Betriebsbedingungen gegeben. Die Verdampfung des Permeates erfordert die Zufuhr der entsprechenden Verdampfungswärme, diese wird der fühlbaren Wärme des flüssigen Zulaufstromes entzogen. Damit vermindert sich dessen Temperatur und damit auch der Fluß durch die Membran. Nach dem Stand der Technik wird daher die gesamte, für die jeweilige Trennaufgabe notwendige Membranfläche bei der Pervaporation auf eine Anzahl von Untereinheiten oder Stufen verteilt. Zwischen zwei Stufen ist jeweils ein Wärmetauscher geschaltet, die in einer Stufe durch Verdampfung des Permeates dem Zulaufstrom entzogene Wärmemenge wird dem Zulaufstrom vor Eintritt in die nächste Stufe wieder zugeführt. Nachteilig an diesem Verfahren ist, daß eine Anzahl von Wärmetauschern und Stufen nacheinander vom Zulaufstrom durchströmt werden, was entsprechend höhere Kosten für Montage und Verrohrung erfordert. Außerdem wird nur ein Teil der Membranfläche bei der optimalen Temperatur betrieben, der restliche Teil immer bei einer geringeren Temperatur. Vorteilhaft ist hingegen, daß nur die Wärmemenge, die tatsächlich zur Verdampfung des Permeats erforderlich ist, zugeführt werden muß.

Bei der Dämpfepermeation wird in einem vorgeschalteten Verdampfer der gesamte Zulauf verdampft und in der Dampfphase über die Membran geleitet. Für den Durchtritt des Permeats muß keine weitere Wärme dem System entzogen werden, wenn man die durch den Joule-Thompson Effekt bedingte Temperaturänderung vernachlässigt. Die gesamte Membranfläche wird bei konstanter Temperatur und damit maximalem Fluß betrieben, eine Aufteilung in Stufen ist nicht erforderlich. Dies führt zu einer verbesserten Ausnutzung der Membranfläche und einer Vereinfachung der Anordnung. Nachteilig bei der Dämpfepermeation ist aber, daß der gesamte Zulaufstrom zunächst verdampft und anschließend wieder kondensiert werden muß, wodurch der Energieverbrauch wegen der begrenzten Wärmerückgewinnung in der Kondensation gegenüber der Pervaporation deutlich erhöht ist. Ferner ist dem Fachmann bekannt, daß der Dampf unter Sättigungsbedingungen über die Membran geleitet werden muß. Jede Überhitzung des Dampfes führt zu einer starken Abnahme der Aktivität und damit der treibenden Kraft für den Transport durch die Membran. Durch die Konzentrationsänderung im Zulauf entlang der Membran ändern sich aber die Sättigungsbedingungen (Siedetemperatur und Dampfdruck), so daß Sattdampfbedingungen nur durch aufwendige Verdichtung, Heizung oder Kühlung aufrecht erhalten werden können. Dadurch kann der zunächst vorhandene Kostenvorteil der Dämpfepermeation gegenüber der Pervaporation vollständig verloren gehen.

Es hat nicht an Versuchen gefehlt, die Vorteile der beiden Methoden zu vereinen, ihre Nachteile aber zu vermeiden. So ist in der US-A-5 151 190 vorgeschlagen worden, das Retentat einer Membranstufe wieder aufzuheizen und dem Zulaufstrom beizumischen, um durch diese Rezirkulation die zugeführte Wärmemenge und damit die mittlere Temperatur des Zulaufstroms zwischen Eintritt und Austritt einer Membranstufe zu erhöhen. Dieses Vorgehen führt aber zu keinem wirklichen Erfolg, wenn eine bestimmte Endkonzentration des Retentats erreicht werden soll, da auch dann eine große Stufenzahl mit zwischengeschalteten Wärmetauschern erforderlich ist und die Rückverdünnung einen schlechteren Ausnutzungsgrad der Membranfläche bedingt als durch ein Pervaporationsverfahren erreicht werden kann.

In der US-A-4 405 409 ist vorgeschlagen worden, die Abwärme einer vorgeschalteten Destillationskolonne als Wärmequelle für die Pervaporation zu nutzen. Dabei beheizt der Brüden der Destillationskolonne konventionelle Wärmetauscher zwischen den einzelnen Membranstufen. Für die Entwässerung von Ethanol wird vorgeschlagen, in die erste, der Vordestillation nachgeschalteten Membranstufe, einen Teil des Retentats dieser Membranstufe zurückzuführen, um die Betriebstemperatur dieser ersten Stufe zu erhöhen. Ein wesentlicher Nachteil dieser Vorgehensweise ist es, daß die Betriebstemperatur der Pervaporation an die der Destillationskolonne gekoppelt und nicht frei wählbar ist.

In der DE-C-34 10 155 ist ebenfalls vorgeschlagen worden, den Brüden einer vorgeschalteten Destillationskolonne als Energiequelle für die Pervaporation zu nutzen. Hier sind die mit dem Brüden beheizten Wärmetauscher aber in die Membranstufen integriert. Es ist ein Zulaufraum vorgeschlagen, dessen eine Wand durch die Zulaufseite der Membran gebildet wird und in dem der Zulaufstrom über eine weitere, als Wärmetauscherfläche dienende, Wand beheizt wird. Eine hierfür geeignete Vorrichtung wird in der EP-A-0 118 760 beschrieben, wobei auch eine elektrische Beheizung erwähnt ist. Ein gleichartiger Vorschlag findet sich in der US-A-36 08 610, wobei die Permeatseite der Membran beheizt wird. Keine dieser Vorrichtungen ist bisher praktisch verwirklicht worden, da einerseits die Integration einer Wärmetauscherfläche in eine Membranstufe erhebliche Probleme bei der Abdichtung mit sich bringt und andererseits eine elektrische Beheizung bei brennbaren Medien aus Sicherheitsgründen nicht durchführbar ist.

In der EP-A-0 294 827 ist vorgeschlagen worden, auf der Zulaufseite der Membran einen flüssigen Film von 0,1 bis 10 mm Dicke aus dem Zulaufstrom auszubilden und durch Kontakt mit dampfförmigem Zulaufstrom zu beheizen. Der dampfförmige und der flüssige Anteil der Zulaufmischung können dabei im Gleich-, Kreuz- oder Gegenstrom geführt werden. Ein wesentliches Merkmal der EP-A-0 294 827 ist es, daß der dampfförmige Teil des Zulaufstroms nach dem Verlassen einer Membranstufe vollständig kondensiert und als Flüssigkeit derselben Stufe zugeführt wird, um den unverzichtbaren Flüssigkeitsfilm auf der Membran zu bilden.

Es hat sich gezeigt, daß die Lehre der EP-A-0 294 827 keinen Vorteil gegenüber der reinen Pervaporation oder der reinen Dämpfepermeation bringt. Die Membran steht nur in Kontakt mit einem vollständig ausgebildeten Flüssigkeitsfilm, der seinerseits in Kontakt mit einer Dampfphase steht. Zwar kann aus der Dampfphase Substanz in den Flüssigkeitsfilm kondensieren, muß aber durch diesen hindurch transportiert werden. Gleiches gilt für die aus dem Dampf in den Flüssigkeitsfilm eingebrachte Wärme. Der vollständig ausgebildete Flüssigkeitsfilm stellt einen zusätzlichen Widerstand sowohl für den Stoffals auch für den Wärmetransport dar. Wird mehr als eine Membranstufe zur Erreichung einer spezifizierten Endkonzentration benötigt, so muß das Retentat der ersten Stufe erneut verdampft, durch die nächste Stufe geleitet und wieder kondensiert werden, um den Flüssigkeitsfilm auf der Membran der zweiten Stufe zu bilden, was einen deutlichen Mehrverbrauch an Energie mit sich bringt.

In überraschender Weise hat sich gezeigt, daß die geschilderten Nachteile nach dem Stand der Technik vermieden und die jeweiligen Vorteile der Pervaporation und Dämpfepermeation vereinigt werden können. Die Erfindung betrifft ein Verfahren zur Trennung von Dampf-Flüssigkeitsgemischen durch kombinierte Pervaporation-Dämpfe permeation mit den Merkmalen wie angegeben im Anspruch 1. Die vorliegende Erfindung betrifft somit eine Kombination der Verfahren der Dämpfepermeation und Pervaporation zur Trennung fluider Gemische und insbesondere eine Kombination der Dämpfepermeation und Pervaporation zur Entfernung mindestens einer unerwünschten Minderkomponente aus einem Zulaufstrom. Wesentliche Merkmale der vorliegenden Erfindung sind, daß
die Membran so angeordnet ist, daß das den Zulaufstrom bildende Zulaufgemisch von unten nach oben an der Zulaufseite der Membran vorbeiströmt, wobei die Membran vertikal angeordnet ist,
sich kein stationärer Flüssigkeitsfilm auf der Membran ausbildet,
das Zulaufgemisch als Dampf-Flüssigkeitsgemisch über die Membran geleitet wird, wobei das Verhältnis zwischen Dampf- und Flüssigkeitsphase in weiten Bereichen frei gewählt werden kann,
Dampf und Flüssigkeit durch dauernde Durchmischung stets im thermodynamischen Gleichgewicht stehen, der Dampf also immer unter Sättigungsbedingungen vorliegt,
durch die Durchmischung von Dampf und Flüssigkeit ein sich auf der Zulaufseite der Membran ausbildender Flüssigkeitsfilm dauernd zerstört wird, so daß der Übergangswiderstand auf der Zulaufseite der Membran sehr klein wird und sich kein stationärer Flüssigkeitsfilm auf der Membran ausbilden kann.

Zur Durchführung des erfindungsgemäßen Verfahrens geeignete Vorrichtungen (Module) sind z.B. in der DE-C-4 225 060 oder der EP-A-0 214 496 beschrieben, beide Vorrichtungen erlauben die vertikale Anordnung der Membran.

Erfindungsgemäß wird der Zulaufstrom ausschließlich, bevor er mit der Membran in Kontakt gebracht wird, geheizt.

In einer bevorzugten Ausführungsform wird der zu trennende Zulaufstrom, das Zulaufgemisch, zunächst in flüssiger Phase auf die gewünschte Betriebstemperatur, z.B. 95°C, vorgeheizt. Es wird dann einem Verdampfer zugeführt, der mit Dampf, einer Wärmeträgerflüssigkeit oder elektrisch beheizt wird, wobei die Heizleistung über geeignete Kontrollgeräte fest eingestellt wird. Durch die eingestellte Heizleistung, die Masse des Zulaufstromes und seine Verdampfungsenthalpie ist am Ausgang des Verdampfers das Verhältnis von Dampf und Flüssigkeit vorgegeben und wählbar. Der Druck wird so geregelt, daß sein Wert mit der Siedetemperatur im Verdampfer korrespondiert.

In einer weiteren bevorzugten Ausführungsform wird die Heizleistung am Verdampfer so eingestellt, daß der molare Dampfanteil im Zulaufstrom zu dem die Membran enthaltenden Modul 90 % bis 150 % des molaren Permeatstromes entspricht.

In einer weiteren bevorzugten Ausführungsform wird das am Ausgang des Moduls erhaltene Retentat in flüssiger Form in einen weiteren Modul geführt, der im Pervaporationsverfahren betrieben wird.

In einer weiteren bevorzugten Ausführung wird ein Teil des Zulaufgemisches nach dem Wärmetauscher abgezweigt und über eine erste Leitung als Flüssigkeit dem Module zugeführt. Der zweite Teil des Zulaufgemisches wird im Verdampfer vollständig verdampft und über eine zweite Leitung in den Modul geleitet, so daß Dampf in dem flüssigkeitsgefüllten Modul eingeleitet wird.

In einer weiteren bevorzugten Ausführungsform wird ein Teil des Zulaufstroms im Verdampfer vollständig verdampft und als Dampf in den Modul geleitet. Der andere Teil des Zulaufgemisches wird nach dem Wärmetauscher abgezweigt und über eine getrennte Leitung, und eine zusätzliche Pumpe in den Modul geführt, so daß sich eine feine Verteilung von Flüssigkeitsteilchen in der Dampfphase ausbildet.

Die folgenden Beispiele und Vergleichsbeispiele erläutern das Verfahren der vorliegenden Erfindung im Vergleich zur reinen Dämpfepermeation und zur reinen Pervaporation.

### Vergleichsbeispiel 1

Ein Plattenmodul, wie er z.B. in der DE-C-42 25 060 beschrieben ist, wird mit einer kommerziellen Pervaporationsmembrane (PERVAP® 1000 der GFT) bestückt, die Membranfläche beträgt 1 m². Die Membran ist horizontal im Modul angeordnet. Auf der Permeatseite des Moduls wird ein Unterdruck von 3 mbar angelegt, das anfallende Permeat wird bei 0°C kondensiert. Ein Zulaufgemisch aus 93,8 Gew% Ethanol und 6,2 Gew% Wasser wird auf 95°C aufgeheizt und über den Modul geführt, auf der Retentatseite des Moduls wird ein Druck von 2,2 bar absolut aufrechterhalten. Bei einem Zulaufstrom von 5 kg/h wird ein Produkt von 4,78 kg/h mit einem Wassergehalt von 2,12 Gew% und einer Temperatur von 71°C erhalten.

### Vergleichsbeispiel 2

Die Anordnung nach Beispiel 1 wird dahingehend variiert, daß das auf 95°C vorgeheizte Zulaufgemisch einem elektrisch beheizten Verdampfer zugeführt und vollständig verdampft wird. Die Membran ist im Modul vertikal angeordnet, der Dampfstrom wird von oben nach unten durch das Modul geführt. Auf der Retentatseite des Moduls wird ein Druck von 1,9 bar absolut gehalten, entsprechend einer Dampftemperatur von 94° C. In einem nachgeschalteten Kühler wird das dampfförmige Retentat vollständig kondensiert. Für eine Zulaufmenge von 5 kg/h benötigt der Verdampfer eine Heizleistung von 1,35 kW, nach der Kondensation werden 4,71 kg/h Produkt mit einem Wassergehalt von 0,63 Gew% erhalten. Die Ausnutzung der Membranfläche ist deutlich besser als im Vergleichsbeispiel 1, wie die geringere Wasserkonzentration des Retentats zeigt.

### Beispiel 1

Es wird wie in Vergleichsbeispiel 2 verfahren, die Membran ist vertikal im Modul angeordnet. Dem Verdampfer wird aber nur eine Heizleistung von 0,25 kW zugeführt. Das Zulaufgemisch wird als Dampf-Flüssigkeitsgemisch von unten nach oben durch den Modul geleitet, am Austritt des Moduls wird eine Flüssigkeit, die nur ganz wenige Dampfblasen enthält, erhalten, die eine Temperatur von 95°C und einen Wassergehalt von 0,51 Gew% aufweist. Gegenüber dem Vergleichsbeispiel 2 ist die Membranausnutzung noch verbessert, wie der geringe Wassergehalt des Retentats zeigt, es wird aber weniger als 1/5 der im Vergleichsbeispiel 2 benötigten Wärme benötigt.

### Vergleichsbeispiel 3

Es wird die gleiche Anordnung wie im Vergleichsbeispiel 1 benutzt, der Modul ist aber mit einer kommerziellen Hochflußmembran von ebenfalls 1 m² Membranfläche bestückt. Das Zulaufgemisch besteht zu 87 Gew% aus Propanol-2 und zu 13 % aus Wasser. Es wird ebenfalls auf 95°C aufgeheizt und flüssig in den Modul geführt, der Druck am Ausgang des Moduls beträgt 2 bar absolut. Bei einer Zulaufmenge von 10 kg/h wird ein Produkt von 93,6 Gew% Propanol-2 und 6,4 Gew% Wasser bei einer Temperatur von 52°C erhalten.

### Vergleichsbeispiel 4

Es wird wie in Vergleichsbeispiel 2 verfahren, nur daß die gleiche Hochflußmembran und ein Propanol-2-Wasser-Gemisch wie in Vergleichsbeispiel 3 verwendet wird. Zur vollständigen Verdampfung des Zulaufgemisches von 10 kg/h aus 87 Gew% Propanol-2 und 13 % Wasser, das auf 95°C vorgeheizt ist, muß dem Verdampfer eine Heizleistung von 2,5 kW zugeführt werden. Nach der Kondensation erhält man ein Produkt von 8,58 kg mit einem Wassergehalt von 0,6 Gew%. Wie im Vergleich der Vergleichsbeispiele 1 und 2 ist eine deutlich bessere Ausnutzung der Membran, erkenntlich am niedrigen Wassergehalt des Retentats, gegenüber dem Vergleichsbeispiel 3 erreicht.

### Beispiel 2

Das Gemisch aus Vergleichsbeispiel 4 wird entsprechend Vergleichsbeispiel 2 behandelt, dem Verdampfer wird zur nur teilweisen Verdampfung des Zulaufgemisches eine Heizleistung von 0,45 kW zugeführt und der Zulaufstrom wird von unten nach oben über die vertikal angeordnete Membran geführt. Das flüssige Retentat auf der Retentatenseite des Moduls besteht aus 99,7 Gew% aus Propanol-2 und zu 0,3 Gew% aus Wasser, bei einer Temperatur von 94°C. Auch hier wird gegenüber den Vergleichsbeispielen 3 und 4 eine verbesserte Membranausnutzung erreicht: der zusätzliche Wärmeaufwand beträgt weniger als 1/5 des im Vergleichsbeispiel 4 benötigten.

### Beispiel 3

Das in Beispiel 2 erhaltene flüssige Retentat wird direkt auf einen Modul mit horizontal angeordneten Membranen geführt, der 1 m² Fläche der gleichen Membran wie in den Vergleichsbeispielen 3 und 4 und wie in Beispiel 2 enthält. Am Austritt dieses zweiten Moduls wird ein Retentat erhalten mit einem Wassergehalt von 0,04 Gew% und einer Temperatur von 74°C.

### Vergleichsbeispiel 5

Um den gleichen Restwassergehalt wie in Beispiel 3 zu erreichen, wurde das in Vergleichsbeispiel 3 erhaltene Produkt wieder auf 95°C aufgeheizt und erneut über einen Modul von 1 m² Fläche der gleichen Membran und Anordnung geführt. Am Ausgang des zweiten Moduls betrug die Wasserkonzentration des Retentats noch 1,7 Gew%, erst nach einem dritten Modul wurde der dem Beispiel 3 entsprechende Restwassergehalt des Retentats von 0,04 Gew% erreicht. Für die Wiederaufheizung zwischen dem ersten und zweiten und dem zweiten und dritten Modul war eine Heizleistung von insgesamt 0,48 kW erforderlich. Gegenüber Beispiel 3 wird die gleiche Wasserkonzentration im letzten Retentat erhalten, und die zugeführte Wärme ist nahezu gleich, es werden aber 3 m² Membranfläche gegenüber 2 m² in Beispiel 3 benötigt.

Dem Fachmann ist ersichtlich, daß die hier für Entwässerungsprozesse angegebenen Beispiele sinngemäß auch auf die Trennung anderer Mischungen, etwa organisch-organischer Mischungen anwendbar sind.

## Patentansprüche

1. Verfahren zur Trennung von durch Dampf-Flüssigkeitsgemischen kombinierte Pervaporation-Dämpfepermeation, wobei ein Zulaufstrom in Form eines Dampf-Flüssigkeitsgemisches mit einer nicht-porösen Membran in Kontakt gebracht wird, der Zulaufstrom ausschließlich bevor er mit der Membran in Kontakt gebracht wird, geheizt wird und der Zulaufstrom als Dampf-Flüssigkeitsgemisch von unten nach oben über die vertikal angeordnete Membran geführt wird, so daß eine dauernde Durchmischung von Dampf und Flüssigkeit erfolgt und sich auf der Oberfläche der Membran kein stationärer Flüssigkeitsfilm ausbilden kann.

2. Verfahren nach Anspruch 1, dadurch gekennzeichnet, daß man den Zulaufstrom mit einem molaren Dampfanteil von 90 % bis 150 % des molaren Permeatstromes einsetzt.

3. Verfahren nach Anspruch 1 oder 2, dadurch gekennzeichnet, daß man Dampfanteil und Flüssigkeitsanteil des Zulaufstroms über getrennte Leitungen in einen die Membran enthaltenden Modul führt.

4. Verfahren nach einem der Ansprüche 1 bis 3, dadurch gekennzeichnet, daß man den Zulaufstrom bei einer Temperatur oberhalb seines atmosphärischen Siedepunktes einsetzt.

5. Verfahren nach einem der Ansprüche 1 bis 4, dadurch gekennzeichnet, daß ein durch die Trennung erhaltenes Retentat in einem nachgeschalteten Membranmodul nach einem reinen Pervaporationsverfahren weiter getrennt wird.

6. Verfahren nach einem der Ansprüche 1 bis 5, dadurch gekennzeichnet, daß man mehrere, die Membran enthaltende Module hintereinander anordnet.

7. Verfahren nach einem der Ansprüche 1 bis 6, dadurch gekennzeichnet, daß aus dem Zulaufstrom Wasser oder eine oder mehrere organische Komponenten abgetrennt werden.

## Claims

1. A process for separation of vapor-liquid mixtures by means of a combined pervaporation-vapor permeation, wherein a feed flow is contacted with a non-porous membrane as vapor-liquid mixture, said feed flow is heated exclusively before being contacted with the membrane, and said feed flow is passed over a vertically arranged membrane from bottom to top as a vapor-liquid mixture, so that a permanent thorough mixing of vapor and liquid results, and no stationary liquid film is able to form on the surface of the membrane.

2. The process according to claim 1, characterized in that said feed flow is applied with a molar vapor portion of 90% to 150% of molar permeate flow.

3. The process according to claim 1 or 2, characterized in that the vapor portion and the liquid portion of the feed flow are passed through separate lines into a module containing the membrane.

4. The process according to any of claims 1 to 3, characterized in that said feed flow is employed at a temperature higher than its atmospheric boiling point.

5. The process according to any of claims 1 to 4, characterized in that a retentate obtained by said separation is further separated in a subsequent membrane module by a pervaporation process alone.

6. The process according to any of claims 1 to 5, characterized in that several modules containing the membrane are successively arranged.

7. The process according to any of claims 1 to 6, characterized in that water or one or more organic components are separated from the feed flow.

## Revendications

1. Procédé destiné à la séparation de mélanges de vapeur et de liquide par pervaporation et perméation à la vapeur combinées, un débit d'entrée sous la forme d'un mélange de vapeur et de liquide étant mis en contact avec une membrane non poreuse, le débit d'entrée étant chauffé exclusivement avant d'être mis en contact avec la membrane, et le débit d'entrée en tant que mélange de vapeur et de liquide étant dirigé de bas en haut sur la membrane disposée verticalement, de façon à assurer un mélange constant de vapeur et de liquide, et qu'un film liquide stationnaire ne puisse pas se former sur la surface de la membrane.

2. Procédé selon la revendication 1, caractérisé en ce que le débit d'entrée est introduit avec une proportion molaire de vapeur de 90 % à 150 % du débit molaire du perméat.

3. Procédé selon la revendication 1 ou 2, caractérisé en ce que le composant vapeur et le composant liquide du débit d'entrée passent par des conduites séparées dans un module contenant la membrane.

4. Procédé selon l'une des revendications 1 à 3, caractérisé en ce que le débit d'entrée est introduit à une température supérieure à son point d'ébullition atmosphérique.

5. Procédé selon l'une des revendications 1 à 4, caractérisé en ce qu'un rétentat obtenu par la séparation continue à être séparé dans un module à membrane disposé en aval selon un pur procédé pervaporation.

6. Procédé selon l'une des revendications 1 à 5, caractérisé en ce que plusieurs modules contenant la membrane sont disposés les uns derrière les autres.

7. Procédé selon l'une des revendications 1 à 6, caractérisé en ce que de l'eau ou un ou plusieurs composés organiques sont séparés du débit d'entrée.
